# EUROPÄISCHE PATENTANMELDUNG

(11) **EP 1 772 948 A1**
(43) Veröffentlichungstag der Anmeldung: **11.04.2007**
(21) Anmeldenummer: 06021177.8
(22) Anmeldetag: 09.10.2006
(51) Int. Cl.: H02K 7/116, F16H 1/32, H02K 7/075, F16H 49/00

(54) **Motorgetriebe mit Torquemotor und Spannungswellgetriebe**

(30) Priorität: 10.10.2005 DE 102005048570
(71) Anmelder: Ortloff, Peter, 09112 Chemnitz (DE)
(72) Erfinder: Ortloff, Peter, 09112 Chemnitz (DE)

(57) **Zusammenfassung**

Zusammenfassung: Die Erfindung betrifft ein einfach zu montierendes und wegen seiner besonders kompakten Bauweise auch in engen Bauräumen vielfältig einsetzbares Motorgetriebe mit sehr hohem Drehmoment. Die Erfindung geht von einem elektronisch kommutierten Motor aus, mit einem Stator in der möglichen Bauform eines Torquemotors und einem Rotor als Getriebeelement. Der Rotor mit seinen Magnetpolen ("Moving Magnet") ist Teil eines Spannungswellgetriebes. Der Rotor ist im Innenteil des Motors ein mehrpoliger Magnetring mit einer Innenellipse oder ein 3fach-Exzenter, der den flexiblen Zahntopf in das um einige Zähne kürzere feststehende Innenzahnrad drückt. Der Vorteil dieses Präzisions-Motorgetriebes ist die Reduzierung auf die unbedingt notwendigen Bauteile.

## Beschreibung

### Technisches Gebiet

Die Erfindung beschreibt eine Motor-Getriebe-Kombination nach dem Prinzip des "Moving-Magnets" und des "Wave-Motion-Gear" mit elektronisch kommutiertem Elektromotor.

### Stand der Technik

### Technischer Hintergrund

Seit das Wellengetriebe von C. W. Musser 1955 (vgl. US-Patent Nr. 2 906 143) erfunden wurde sind von zahlreichen Forschem unterschiedliche Typen von Wellengetrieben entwickelt worden. Es hat zahlreiche Aufbauten mit angeflanschten und in Gehäusen integrierten Motoren gegeben. Zwei Lösungsmöglichkeiten werden zum Beispiel durch die Patente DE 10105 814 C1 und EP 1416 619 A1 dargestellt und beinhalten das preisliche Grundproblem der getrennten Einheiten und damit verbunden den hohen Preis. Desweiteren ist keine Direktmessung bekannt, die Fehler der Mechanik eliminieren soll.

In der Antriebstechnik, insbesondere im Bereich von Kleinmotoren, sind bürstenlose Elektromotoren beispielsweise aus US 3 988 654 bekannt, sie lassen sich in einem Regelkreis betreiben. Zur Regelung der Motoren wird daher eine Information über die Rotorlage benötigt. Diese Information läßt sich durch eine Messung des Stromes oder durch eine Lagesensorik, bekannt sind Hallsensoren siehe DE 32 00 664 oder US 3 988 654 darstellen.

### Problemstellung

Am Markt gibt es eine starke Nachfrage nach Spannungswellgetrieben mit Motor mit verbesserter Leistung und preisgünstigem Aufbau. In vielen Anwendungen ist die Kombination Motor und Wellgetriebe durch die hohen Produktionskosten nicht einsetzbar. Für Positionierantriebe mit Sinusansteuerung ist eine genaue Lage der Pole notwendig.

### Entwicktungsaufgabe

Es besteht daher die Aufgabe, kostengünstig ein funktionsintegriertes Bauteil für ein Motorgetriebe zur Verfügung zu stellen. Die Entwicklungsaufgabe besteht in der Reduzierung der Produktionskosten und in der Nutzung der hohen Drehmomente der Torquemotoren und der Verstärkung dieser Eigenschaften durch ein spielfreies Getriebe. Es sollten außerdem die sehr guten Eigenschaften neuester Motorentechnologie und hochintegrierter Elektronik vereinigt werden. Die Eigenschaft von EC-Motoren (elektronisch kommutierte Motoren) mit hohem Wirkungsgrad und hohem Drehmoment (siehe Torquemotoren) sollten in diesem Konzept verwirklicht werden.

### Ausführung der Erfindung

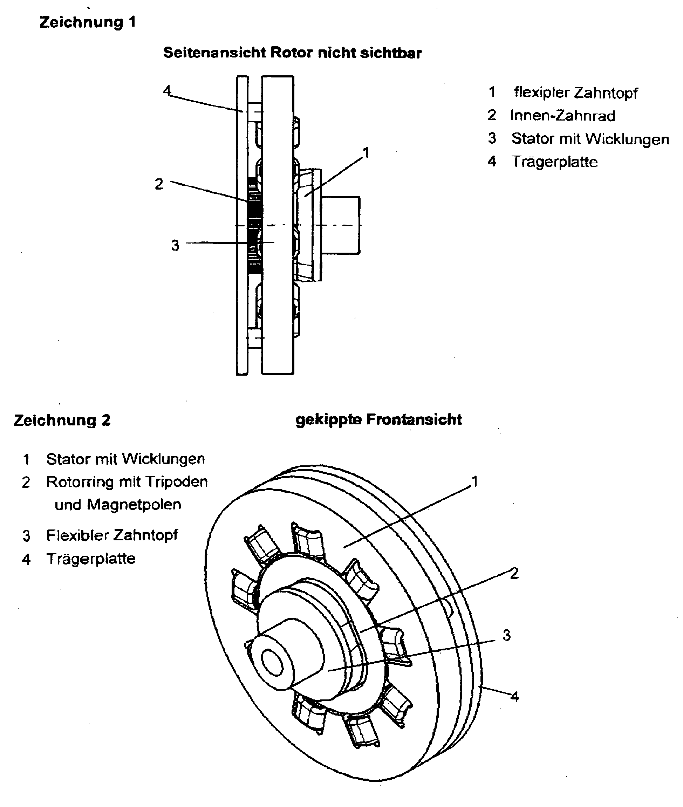

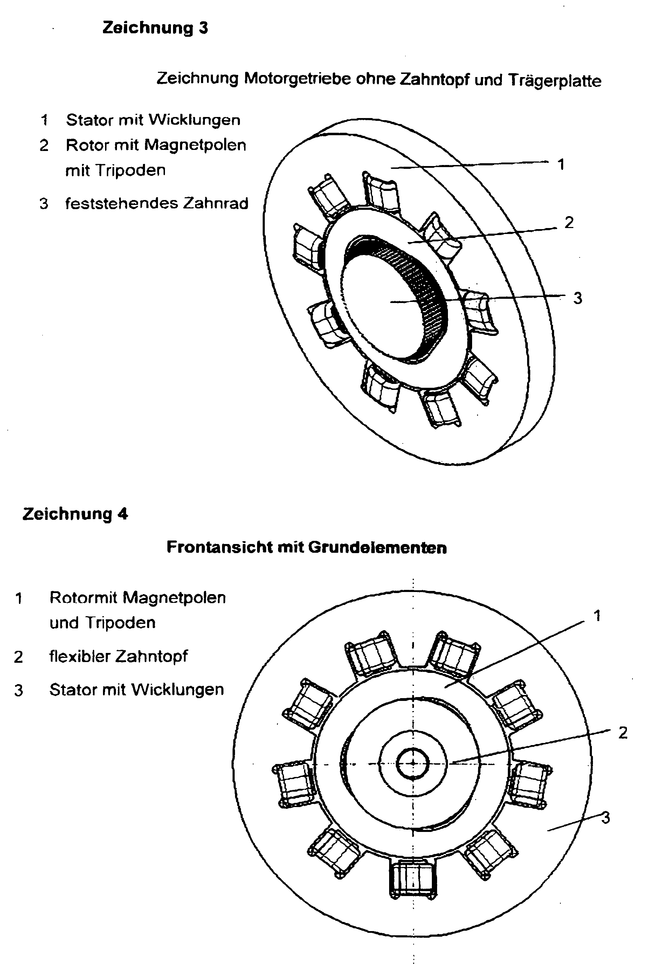

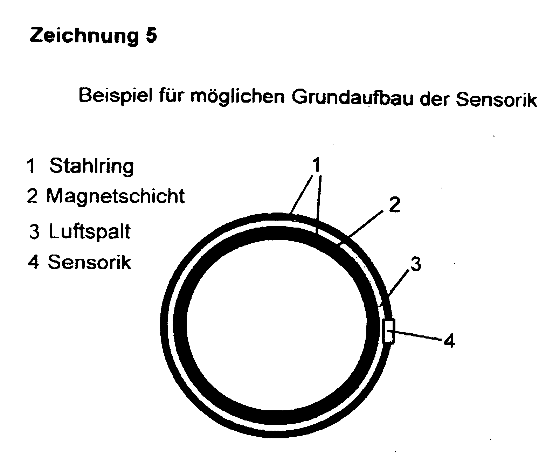

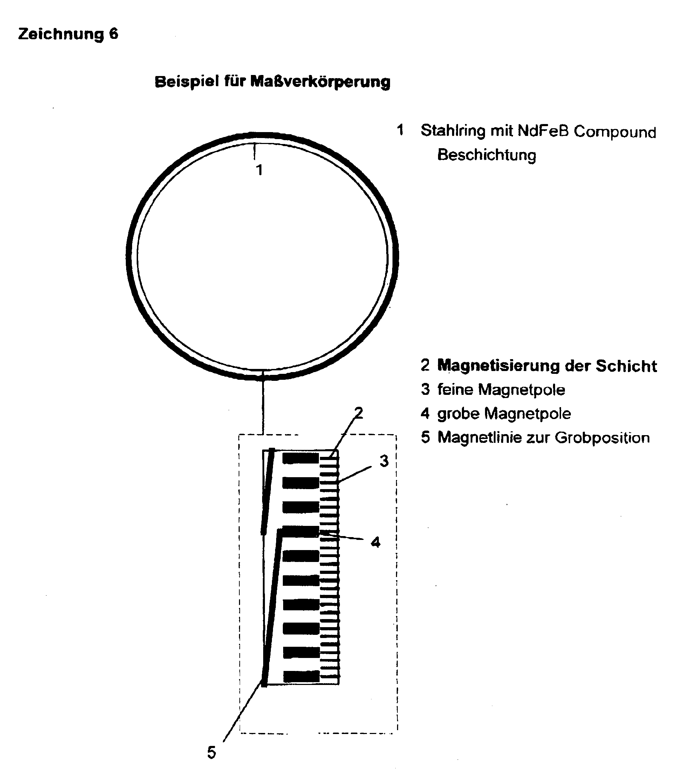

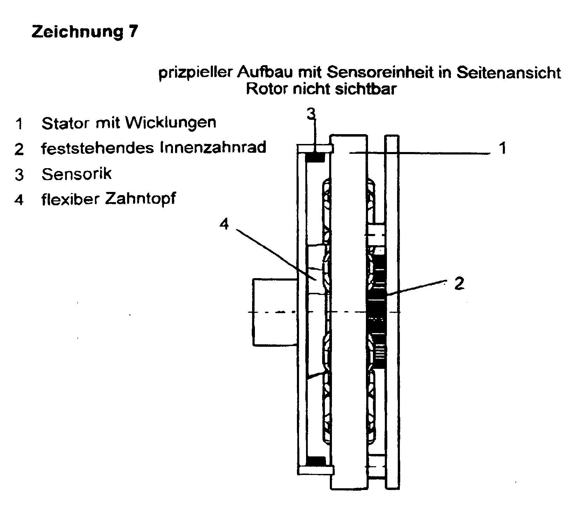

Die Erfindung besteht aus der Reduktion von Bauteilen ohne die Funktion zu verändern. Altemativ für Präzisionsanwendungen mit einer Direktmessung mit sehr hoher Genauigkeit. Der Erfinder hat vorgeschlagen das Getriebe als Teil des Motors aufzubauen, in welchem der Rotor mit seinen Dauermagneten gleichzeitig als Teil des Getriebes funktioniert (siehe Zeichnung 1). Das statische feststehende Innenzahnrad sorgt für einen stabilen und zentrischen kostengünstigen Aufbau. Der flexible Innenzahntopf ist Ausgang des Getriebes. Ihre am Innenläufer angeordneten Pole sind mit Permanentmagneten versehen.

Der Flexible Zahntopf ist ein Kernelement des Getriebes, hier sind die Forderungen an die Steifigkeit, Flexibilität und besonders gute Gleiteigenschaften besonders hoch. Die Lösung erfolgt durch einen besonders schlagzähen und gleitfähigen Kunststoff. Zusätzlich werden Versteifungen im Boden eingearbeitet. Wichtig ist hier ein verschleißfester Aufbau, der notfalls durch Schmierung verbessert wird.

Der Stator ist eine Flachbaugruppe mit einem weichmagnetischen Kern und einer mehrpoligen Wicklung in Stem- oder Dreieckschaltung. In den Statomuten ist die Arbeitswicklung eingebettet. Das Statorpaket kann insbesonde in ein Gehäuse aus Kunststoff eingebettet werden, das im Spritzgussverfahren hergestellt werden kann.

Torquemotoren sind mehrpolige Synchronmotoren. Durch die charakteristischen Eigenschaften dieser Bauart sind sie ideal als hochgenaue Direktantriebe für Werkzeug- und Messmaschinen. In diesem Fall wird die Eigenschaft des Torquemotors, hohes Drehmoment, noch verstärkt durch die Kombination mit einem Wellspannungsgetriebe, so dass in sehr kleinem Bauraum sehr hohe Drehmomente realisiert werden können.

**Die elektronisch kommutierten Motoren sind qualitativ hochstehende** Gleichstrommotoren, oft mit Neodym-Magneten aufgebaut aufgrund der hohen Energiedichte der Magnete. Im Gegensatz zu den DGMotoren steht hier der Stator mit Wicklung still. Es rotiert der Rotor mit seinen Permanentmagneten in dem elektronisch erzeugten Drehfeld der dreiphasig angesteuerten Wicklung. Dies hat den Vorteil, dass keine Bürsten mit ihren Lebensdauer verkürzenden Eigenschaften notwendig sind.

Die Erfindung betrifft auch ein Verfahren zur Herstellung eines Rotors, der in einem bereits beschriebenen Motorgetriebe eingesetzt werden kann.

Herkömmlich hergestellte Rotoren weisen einige nicht zu unterschätzende Nachteile auf. So müssen einzeln hergestellte Bauteile wie Magnete, Kurzschlußringe und Lagerungen nachträglich zusammengefügt werden.

Es soll daher ein Verfahren zur Verfügung gestellt werden das diese Nachteile nicht aufweist.

Ein solches Verfahren zeichnet sich dadurch aus, dass ein Kunststoffgrundgerüst mit sehr guten Gleiteigenschaften in einem Mehrkomponenten-Spritzgussverfahren im zweiten Schritt durch ein Magnetcompound ergänzt wird, und in einem nachgeschalteten Magnetisierungschritt für die vorgesehene Anwendung magnetisiert wird. Bekannt ist die Herstellung von Magnetringen mit unterschiedlichen Magnetkonfigurationen. Neu an dem Verfahren ist, die Kombination von verschiedenen Eigenschaften wie in unserem Fall, gute Gleiteigenschaften und hochkoerzitive kunststoffgebundene Magnete.

Auf diese Weise entsteht ein Funktionselement, das auf der Getriebeseite sehr gute Gleiteigenschaften besitzt und durch die eingelagerten magnetischen Füllstoffe hochkoerzitive Magnetpole auf der Statorseite hat.

Es besteht daher die Aufgabe, kostengünstig eine funktionsintegrierte Elektronik mit geringem Aufwand zu erstellen, die den Nachteil vorhandener Ausführungen mit hohem Preis und großem Platzbedarf löst.

Die heute zur Verfügung stehenden Mikrocontroller (Digitale Signal Prozessoren) verfügen über interne Funktionsblöcke, wie Rechenwerke und A/D-Wandier, die Ströme messen und sehr schnell Regelungsfunktionen durchführen können. Es ist deshalb vorgesehen mit nur einem Controller die Aufgabe zu lösen.

Neu an diesem Verfahren ist das Ablegen von Regel-Algorithmen im Speicher, so dass der Prozessor von hohem Rechenaufwand befreit ist.

Anwendungen der einfachsten Ausführung sind insbesondere im Automobilbereich Fensterheber-, Scheibenwischer- und Verdeckantriebe, die wegen der geringen Baugröße und des hohen Drehmoments bevorzugte Einsatzgebiete darstellen. In diesem Fall wird auf sensorlose Kommutierung gesetzt. Der Prozessor übernimmt nur zusätzliche Funktionen, wie Überwachung des Einklemmschutzes und andere Funktionen.

In der anspruchsvollen Version sind es Antriebe für Roboter mit sehr hohen Kräften und hoher Positioniergenauigkeit. In diesem Fall ist eine mehrstufige Sensorik zur Absolutpositionsmessung vorgesehen (siehe Zeichnung 6). Es ist eine sehr schnelle Kommunikation mit dem Zentralrechner vorgesehen. In diesem Fall sollten, wie in der "Digitalen Fabrik" vorgesehen, beliebig viele Achsen gleichzeitig arbeiten können, was durch die verteilte Intelligenz möglich ist.

## Patentansprüche

1. Flachbauendes Präzisions-Motorgetriebe mit spielfreiem Getriebe als Basiseinheit in einem gemeinsamen Grundkörper mit Rotor als Teil des Spannungswellgetriebes,
**dadurch gekennzeichnet, dass** Motor und Getriebe eine Konstruktionseinheit bilden, die wahlweise ohne Sensorik mit Kommutierung, oder aber auch mit Sensorik und damit als Präzisionspositionierung betrieben werden kann.

2. Flachbauendes Präzisions-Motorgetriebe mit spielfreiem Getriebe nach Patentanspruch 1,
**dadurch gekennzeichnet, dass** im Zentrum ein feststehendes Zahnrad mit Außenverzahnung ist.

3. Flachbauendes Präzisions-Motorgetriebe mit spielfreiem Getriebe nach Patentanspruch 1 und 2,
**dadurch gekennzeichnet, dass** die Kraftüberfragung der Übersetzung durch einen flexiblen Zahnradtopf mit Innenverzahnung erfolgt.

4. Flachbauendes Präzisions-Motorgetriebe mit spielfreiem Getriebe nach Patentanspruch 1, 2 und 3,
**dadurch gekennzeichnet, dass** der Antrieb einen Rotorring mit Magnetpolen und eine elliptische Form im Innern hat.

5. Flachbauendes Präzisions-Motorgetriebe mit spielfreiem Getriebe nach Patentanspruch 1, 2, 3 und 4,
**dadurch gekennzeichnet, dass** der Antrieb auch einen Rotorring mit Magnetpolen und eine trianguläre Form im Innem hat, die durch die 3fach Auflage auf ein Lager verzichten kann.

6. Flachbauendes Präzisions-Motorgetriebe mit spielfreiem Getriebe nach Patentanspruch 5,
**dadurch gekennzeichnet, dass** der Antrieb einen Rotorring im Zwei-Komponentenspritzguss mit unterschiedlichen Eigenschaften hat,

7. Flachbauendes Präzisions-Motorgetriebe mit spielfreiem Getriebe nach Patentanspruch 6,
**dadurch gekennzeichnet, dass** der Antrieb ein Statorpaket mit elektronisch kommutiertem Motor ist.

8. Flachbauendes Präzisions-Motorgetriebe mit spielfreiem Getriebe nach Patentanspruch 7,
**dadurch gekennzeichnet, dass** der Antrieb zum größten Teil in Kunststoff ausgeführt ist, wobei der Rotor ein Spritzgussteil ist.

9. Flachbauendes Präzisions-Motorgetriebe mit spielfreiem Getriebe nach Patentanspruch 8,
**dadurch gekennzeichnet, dass** der Antrieb eine direkte Messung nach dem Aufbau (siehe Zeichnung 5) hat.

10. Flachbauendes Präzisions-Motorgetriebe mit spielfreiem Getriebe nach Patentanspruch 9,
**dadurch gekennzeichnet, dass** der Antrieb eine Elektronik hat, die nur aus wenigen Bauteilen besteht.

11. Flachbauendes Präzisions-Motorgetriebe mit spielfreiem Getriebe nach Patentanspruch 10,
**dadurch gekennzeichnet, dass** der Antrieb eine Massverkörperung hat, die durch eine Mikrosensorik eine sehr hohe Auflösung hat, besser 10.000.000 Impulse/Umdrehung (siehe Zeichnung 6).

12. Flachbauendes Präzisions-Motorgetriebe mit spielfreiem Getriebe nach Patentanspruch 11,
**dadurch gekennzeichnet, dass** der Antrieb einen Sensoraufbau hat, der durch die nach außen verlagerte Messung eine sehr hohe Auflösung besitzt und eine geringe Empfindlichkeit gegen Magnetfelder aufweist (siehe Zeichnung 7).
